# EUROPEAN PATENT APPLICATION

(11) **EP 2 258 656 A1**
(43) Date of publication of application: **08.12.2010**
(21) Application number: 09275039.7
(22) Date of filing: 29.05.2009
(51) Int. Cl.: B81C 1/00, G02B 26/06

(54) **Self-Deformable Mirrors and the Support Thereof**

(71) Applicant: BAE Systems PLC, 6 Carlton Gardens London SW1Y 5AD (GB)
(72) Inventor: The designation of the inventor has not yet been filed
(74) Representative: BAE SYSTEMS plc Group IP Department

(57) **Abstract**

Fluid pressure, applied e.g. via an electrorheological fluid is used to control and/or support the shape of a self-deformable mirror during manufacture, use or transportation. For transportation, the mirror is supported beforehand by pressure fluid in a flexible container. The fluid is withdrawn after transportation to permit release of the mirror. The transportation aspect of the invention is applicable also to other fragile structures.

## Description

This invention relates to self-deformable mirrors and to the support thereof during manufacture, use and transportation.

Deformable mirrors are often used in the field of adaptive optics (AO). For example, phase distortions in a signal may be sensed by a wave front sensor and corrected for using a deformable mirror linked to an appropriate control system. Such deformable mirrors may be employed in numerous fields, including:
- imaging, for example deformable mirrors are used in astronomy to improve the resolution of earth-based telescopes that are otherwise affected by atmospheric distortions;
- laser sensing, where the amount of laser light that can be delivered onto a target is significantly increased by using a deformable mirror to correct for atmospheric distortions - this enables either better information to be obtained or objects to be identified at a greater range; and
- laser generation, where a deformable mirror can be used intracavity within a high power laser to counter the thermal blooming that can be otherwise induced by the high concentration of laser light inside the cavity.

Self-deformable mirrors must be manufactured and controlled in use to very high standards of accuracy if satisfactory performance is to be obtained. As described in more detail later, in conventional manufacture of such mirrors the polishing process is critical, and the present invention in one aspect can offer assistance in this respect.

In this aspect, the invention provides the use of pressure in a fluid to support or control the shape of a self-deformable mirror.

In another aspect the invention provides the use of a rheological fluid to support or control the shape of a self-deformable mirror.

A confined volume of said fluid may be maintained at a pressure above ambient pressure.

Alternatively fluid pressure may be generated reactively in a contained volume of fluid in response to deformation of the mirror.

The support or control may be effected during polishing of a reflective surface of the mirror.

The fluid pressure may be applied in a magnetorheological or electrorheological fluid.

Rheological fluids are one whose viscosity or stiffness can be controlled by the application of a magnetic or electric field.

Magnetorheological (MR) fluids are produced by suspending magnetically soft particles in a base fluid (e.g. hydrocarbon or silicon based). On the application of a magnetic field, the particles align along the magnetic field lines, forming fibrous structures which change the material properties, eventually forming a near plastic state.

In the case of electrorheological (ER) fluids, it is an electro-static attraction between particles in the fluid which gives rise to the variation in viscosity. There recently have been developed giant ER fluids. These fluids are based on the use of specifically engineered particles which provide a significantly larger variation in viscosity to the extent that they can exhibit solid-like behaviour (i.e. the ability to transmit shear stress without flow) and thus can be considered to have a stiffness.

The support or control may be effected by varying the pressure and/or the stiffness and/or the viscosity of the fluid.

The support or control by means of fluid pressure may also or alternatively be effected during operation of the mirror. Examples of this are described later.

In a further aspect, the invention provides a self-deformable mirror comprising a reflective surface on a substrate, a self-deformable means attached to the substrate for imparting deformation thereto, and means defining at least one cavity adapted to receive and contain fluid whereby in operation support and/or control is communicated to the substrate from the fluid.

There may be means for pressuring the fluid in the cavity.

The means defining a cavity may comprise a compliant edge support for the substrate, which support bounds the cavity.

There may be a porous or open cellular structure within the cavity for supporting the substrate.

There may be at least one compliant support for the substrate disposed within the cavity.

In another embodiment, there may be a plurality of said cavities for applying fluid support and/or control to different portions of the substrate.

Each cavity may be bounded by a complaint structure. When the fluid is a rheological fluid, the mirror may comprise means for applying a magnetic or electric field to the fluid.

The field-applying means may be arranged to permit the application of different fields to fluid in different cavities or different fields to fluids in different parts of a common cavity.

When the rheological fluid is an electrorheological fluid and the deformable means comprises a piezo-electric element, a connection to at least one electrode of the element may be provided via a flexible circuit which provides a connection also to a said electrode for applying a electric field to the fluid.

Self-deformable mirrors can be used in astronomical instruments carried into orbit in spacecraft, to help correct for distortions in the deployed optical system. Such mirrors can be fragile in nature, making them susceptible to damage or distortion under the stresses of launch. A third aspect of the present invention can provide a means of isolating the mirror from such stresses, and indeed is of general application in the support of fragile structures during transportation.

In this aspect the invention provides a method of supporting a fragile structure during transportation comprising before transportation disposing at least one flexible container and the structure adjacent each other, filling the container with pressurisable fluid so as bring it into contact with a surface of the structure and after transportation exhausting the fluid from the flexible container.

The method may comprise effecting contact between a surface of the structure and the at least one flexible container at a number of spaced-apart locations.

Thus the method may comprise effecting contact between the surface and a said flexible container via a barrier having apertures corresponding to said spaced apart locations.

The surface at at least some of the spaced apart locations may be contacted by a respective flexible container at each location.

The method may comprise varying the support afforded to the fragile structure at different locations by varying the pressure and/or the stiffness or viscosity of the fluid.

In a further aspect the invention provides support apparatus for transportation of a fragile structure comprising support structure for receiving the fragile structure, at least one flexible container, means for supplying pressurisable fluid to the container to deploy it into contact with a surface of the fragile structure, and means for exhausting the fluid from the container.

There may be means for varying the pressure and/or viscosity or stiffness of the fluid.

When the fluid is a rheological fluid the means for varying the viscosity or stiffness of the fluid may comprise means for applying a magnetic or electrical field to the fluid or part of it.

The apparatus may comprise a barrier having at least one aperture and arranged to be disposed between a said container and the fragile structure so that the container contacts the surface of the structure through the aperture.

The support structure may comprise spaced-apart sections configured to receive the fragile structure between them, each section having associated therewith a said flexible container arranged to be deployed into contact with a respective surface of the fragile structure.

The invention also provides a method of supporting a self-deformable mirror during transportation thereof comprising applying fluid pressure to a substrate which defines a reflective surface of the mirror.

The invention now will be described merely by way of example with reference to the accompanying drawings, wherein:
Figures 1 to 8 illustrate embodiments of self-deformable mirrors according to the invention, and
Figures 9 to 12 illustrate methods of transporting self-deformable mirrors and other fragile structures.

Because of the difficulty of obtaining optically flat PZT discs, self-deformable mirrors are sometimes polished flat once assembled. This is especially the case if very high curvatures are required and the assembly (unimorph or bimorph) is very thin, or for edge supported devices where the centre of the mirror assembly may deflect during the polishing process, leading to uneven polishing and a residual curvature which cannot be polished out. One way to avoid this is to support the mirror during polishing. This can be achieved by adding a weight to the back of the mirror during the polishing process. However, this is a long-winded and skilled activity; the mirror will need to be regularly inspected during polishing, and for this the weight must be taken off and replaced again afterwards. This process becomes more difficult for thinner devices with a smaller diameter, where print-through can occur from small surface features on the underside of the mirror.

Where the final mirror shape is spherical (or other non-flat shape), there is again a big benefit from being able to undertake a final polish.

In the first embodiment of this invention, a pressurisable fluid (here a relatively incompressible liquid e.g. an oil or a hydraulic fluid such as brake fluid although in principle a gas could be used) is used to provide support during polishing. Applied as a fluid, the material will fill every gap, and will offer an even, uniform support. The pressure applied to the fluid can be adjusted to ensure that an even surface polish is obtained. Once the polishing process is complete, the fluid is easily drained away with very little stress induced on the mirror. Used in this way, the fluid can be integral to providing a process which is as de-skilled as possible. Further support functionality can be added by using an ER fluid. Here the support can be controlled or adjusted by applying an electric field to the fluid.

Preferably the fluid also is pressurised, as adjusting the pressure then gives an additional means of controlling the support given to the mirror surface. However pressurisation is not essential, except to such minimal amount as is necessary to ensure that the fluid completely fills the cavity in which it is contained and is in full contact with the surface to be supported. If the viscosity or stiffness of the fluid is controlled in different regions by different electrodes, polishing can be targeted on specific parts of the mirror surface. Thus, where the support is less compliant (more stiff/higher pressure), the polishing action will tend to have a larger removal rate; the areas where the compliance is more will tend to 'give' resulting in less material being removed.

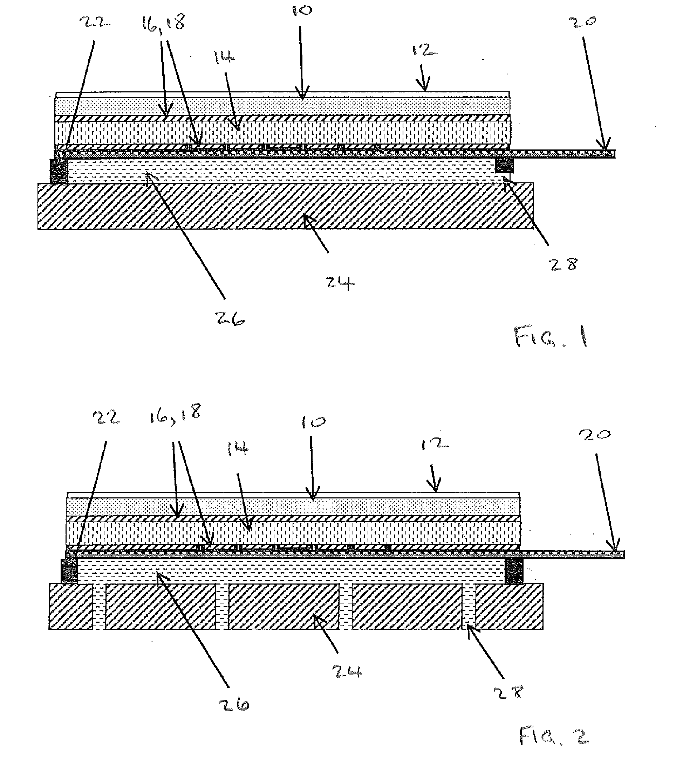

Referring to Figure 1, a circular self-deformable mirror comprises a passive substrate 10, an upper surface 12 of which carries a reflective coating so as to form a mirror surface. A piezoelectric layer 14 e.g. of PZT material is fixed to the underside of the substrate 10, and has a common upper electrode 16 and a series of lower electrodes 18, individually addressable via a flexi-circuit 20. The application of electric fields (voltages) via the electrodes 16,18 as known per se to the PZT layer causes it to deform selectively, this deformation being transmitted to the substrate 10 and thus imposed in the mirror surface 12.

The mirror substrate 10 and the piezoelectric layer 14 are supported around their periphery be a continuous compliant (e.g. elastomeric) annular support 22 from a rigid base 24 The base 24, the support 22 and the underside of the substrate/PZT layer assembly 10, 14 define a cavity 26 into which pressurisable fluid may be admitted via an inlet 28.

In order to perform a final polishing operating on the mirror surface 12, the assembly of Figure 1 is mounted on a rotable polishing jug. Pressure fluid is supplied to the inlet 28 via a rotating joint (known per se) and the pressure is controlled during the polishing operation. The fluid pressure results in the mirror bowing outwards slightly at the centre; increasing or reducing the pressure permits the amount of bowing to be adjusted, and with suitable feedback from the polished surface during the polishing operation (e.g. by laser interferometer) a polished surface can be achieved which is flat when there is no pressure differential across the substrate 10. Of course the mirror can be finished to a profile which is not in fact flat in the sense of being planar: it could equally well be finished to a desired concave or convex or other three-dimensional shape, depending on its intended use. Thus "flat" as used herein should be taken to mean "conforming to a desired optical profile". In a simpler system, control of the finished polished shape can be achieved by monitoring the pressure of the fluid in the chamber 26, provided that the relationship between the pressure and bowing of the substrate 10 is known.

There now will be described with reference to figures to a number of variations on the structure of Figure 1. Corresponding parts already described with reference to Figure 1 carry the same reference numerals.

Figure 2 shows a first modification to the structure of Figure 1. In Figure 2, several fluid inlets 28 are provided in the base 24 instead of in the compliant support 22. This can have two advantages; firstly, apertures in the compliant support 22 can be avoided, thereby eliminating possible consequent local variations in the stiffness of the support, which could affect the uniformity of the mirror dynamic response. Secondly a larger and more distributed flow area can be provided for the passage of fluid into and out of the cavity. This can enable more agile control of the pressure applied to the mirror.

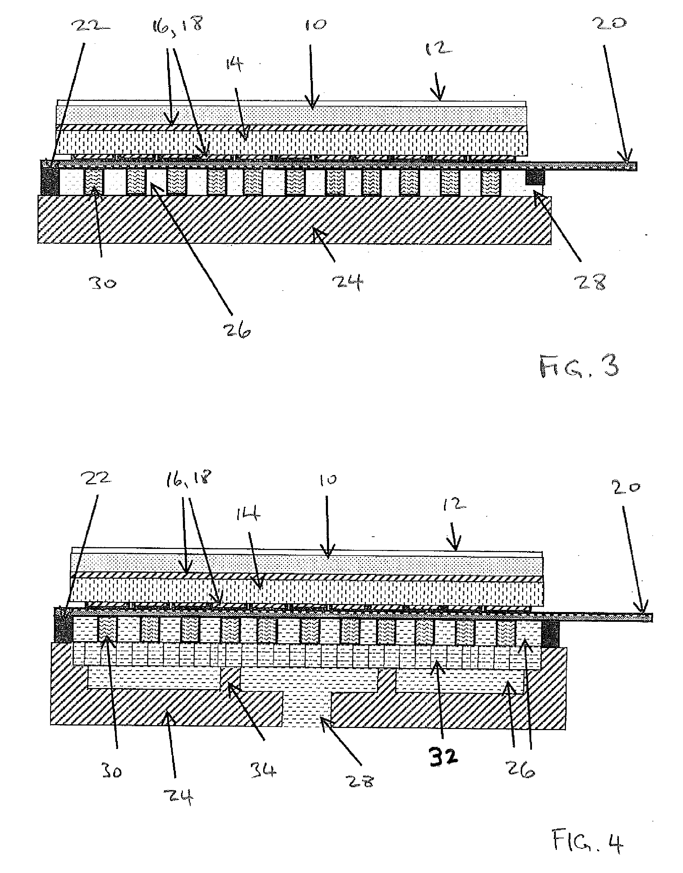

In Figure 3, the mirror substrate 10 is supported across its extent by a number of compliant pillar supports 30 distributed within the cavity 26 and fixed at top and bottom to the PZT layer 14 and the base 24. This reduces the tendency for the substrate to flex and can enable an optically flat mirror surface to be achieved more easily during polishing with the assistance of the modulated pressure fluid in the cavity 26. Typically this type of mirror will have a more localised, zonal response than the purely edge supported types shown in Figures 1 and 2.

In this embodiment the compliant ring 22 does not directly support the periphery of the mirror substrate 10, but forms a seal between the flexicircuit 20 and the base 24 so as to bound the fluid-containing cavity 26.

In Figure 4 a disc 32 of porous ceramic material or of a material having a rigid open cell structure, is employed to promote an even distribution of pressure through the cavity 26. This may be of use when the mirror is of relatively large diameter and the compliant pillars 30 are located throughout the face of the substrate 10 bounding the cavity 26. The disc 32 is fixed to and supports the pillars 30, and in itself fixed to and supported by pillars 34 formed in the base 24. If the fluid is an electrorheological fluid, the disc 32 preferably is of a non-metallic open cell foam structure; to avoid the risk that the small particles in the fluid could get clogged in a porous ceramic material. As in Figure 3, the compliant ring 22 defines the cavity 26 instead of directly supporting the edge of the substrate 10.

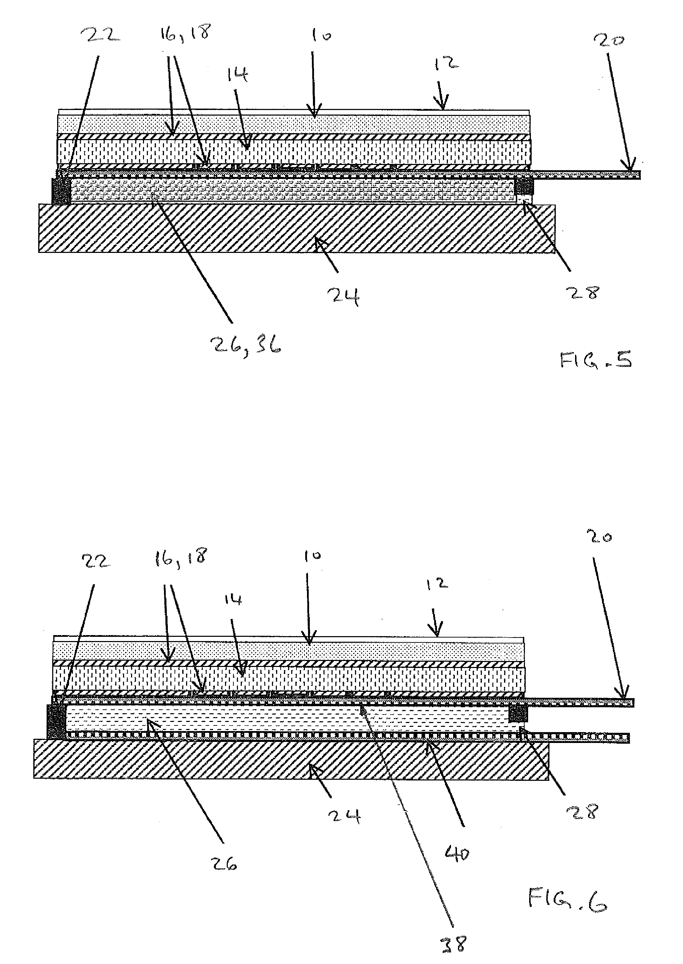

In Figure 5 the pillars 30 are replaced by a continuous porous ceramic or (especially if an ER fluid is used) open cellular disc 36, the upper and lower surfaces of which are fixed to the PZT layer 14 and the base 24. The disc 36 provides continuous support over the area of the substrate 10, acting effectively as an infinite number of pillars 30. Pressurisable fluid applied via one or more inlets 28 is distributed via paths intrinsic in the disc 36 to all parts of the cavity 26. The fluid being under pressure, the cavity 26 is full of fluid and provided the fluid is substantially incompressible pressure changes can be communicated through the passages in the disc 36 with only minimal physical movement of fluid.

If the substrate 10 is particularly thin, especially relative to its diameter, it may be that the action of polishing will create a rippling effect over the surface of the mirror. This is believed to be due to the substrate 10 bounding a constant volume of substantially incompressible fluid in the cavity 26. However, if rheological fluid is used, it can be made considerably more viscous and stiffer by the application of an appropriate magnetic or electrical field, enabling it to resist the formation of ripples in the substrate 10. Figure 6 shows a variation of the Figure 1 embodiment in which electrodes are incorporated to apply an electrical field to an ER fluid in the cavity 26. The flexi-circuit 20 has on its underside an electrode 38. A further electrode 40 is provided on the upper surface of the base 24. The application of a voltage across the electrodes 38, 40 creates a electric field in the ER fluid in the cavity 26. Either of the electrodes 38, 40 may be divided into several separate electrodes, enabling different fields to be created in different regions of the ER fluid, and the support provided to different portions of the substrate 10 to be varied.

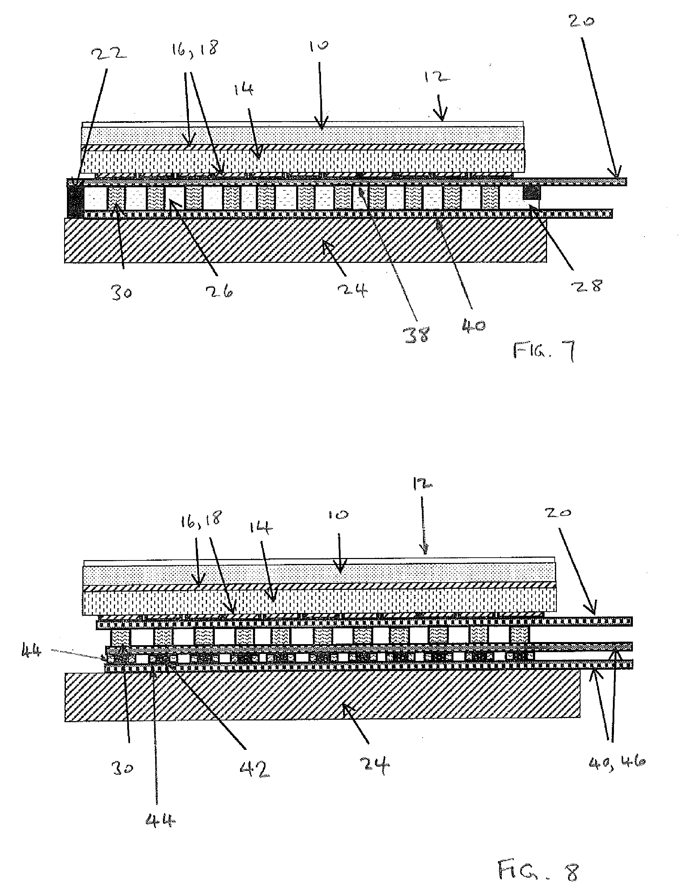

It will be appreciated that ER fluid can be used in any of the embodiments of figures 1 to 5, electrodes being provided on the top and bottom surfaces of the cavity 26 in each case. Thus in Figure 7, the electrodes 38, 40 are incorporated in the embodiment of Figure 3. Whilst the pillars 30 can themselves resist the development of ripples in the substrate 20 during polishing, the use of an electrode 38 or 40 in several separate sections can enable fine control of the final polished shape to be achieved.

In the embodiment of Figure 8 there is no large single cavity corresponding to the cavity 26 of Figures 1 to 7. Instead, in a variant of the Figure 3 embodiment, each pillar 30 has associated with it a small cavity 42 filled with ER fluid and sealed under a small over-pressure. Each cavity is bounded by a compliant ring 44 and upper and lower flexi-circuits containing electrodes 46, 40. One or both of these electrodes is in separate sections so that the ER fluid is individual cavities 42 or groups of those cavities can be addressed separately. The various layers of the structure are joined serially to each other so that the substrate 10 is supported from the base in a manner such that the supports can withstand both compressive and tensile stress. A controlled and programmed response to the forces suffered by the substrate during polishing of the mirror surface thus can be provided by the application of suitable voltages across the cavities 42.

Whilst shown as of substantial thickness, the pillars (and any substitute compliant structure such as a foam or cellular layer) may in fact be made quite thin and with very little compliance, if sufficient compliance is provided in the cavity-defining structures 44. Thus the pillars 30 can be reduced to a compliant or non-compliant glue layer joining the upper electrode flexi-circuit 40 to the flexi-circuit 20. Indeed the flexi circuit 20 and 40 can be combined as at 38 in Figure 6 or 7.

The invention has so far been specifically described with reference to the polishing of the mirror surface during final manufacture. The invention however also can be utilised during operation of the mirror, especially in those embodiments using rheological and in particular ER fluids. In the latter embodiments, the cavity 26 of Figures 6 and 7 may be filled and sealed preferably under pressure and the stiffness and viscosity of the ER fluid controlled as a whole or in parts to provide an underlying or baseline correction to the mirror shape, on which is superimposed high-bandwidth control by means of the PZT layer 14. The control effected by the ER fluid is particularly suited to the suppression in large mirrors (with active feedback) of unwanted low-frequency resonances outside the operating bandwidth of the mirror, and/or the correction of thermally-induced distortion. In Figure 8, the compliance of the cavities 42 can be controlled to offer a zonal deformable mirror with a programmable influence overlap function (this is a measure of how much influence each actuator has on its nearest neighbours; typically a mirror with a high influence function will have a higher stroke but lower bandwidth than a mirror with a lower influence function).

Although the use of the ER fluids is preferred, MR fluids also can be used although there may be a weight and/or space envelope penalty arising from the need to employ electromagnets to generate the necessary magnetic fields.

An important application of self-deformable mirrors is in space-based astronomical telescopes and other apparatus carried by artificial satellites. Because of the need to keep these structures as light as possible, they may be characterised by relatively low structural rigidly and exhibit resonant frequencies of significantly less than 1 KHz. A broad spectrum of vibrations and sometimes also shock loads are present during a space launch and the subsequent mission, especially if an extra-terrestrial landing is involved. Typically the largest vibration amplitudes are associated with the lowest frequencies. The following embodiments of the invention utilise confined or otherwise pressurisable fluids to provide support for self-deforming mirrors during a space launch. The principle is applicable also to the protection of fragile equipment generally during launch or during other transportation.

The support devices proposed can further reduce the effects of vibration/shock through the use of feedback (e.g. pressure sensors) to vary the compliance of the support provided. An advantage of the support devices proposed is that they can provide lightweight and targeted support to smaller structural elements, and can be used in addition to conventional shock absorbers to provide a dual stage anti-vibration strategy.

Thus thin layers of confined fluid can be used to help cushion delicate membranes and other components between more rigid casings. Especially where one of the surfaces to be supported is an optical surface, a convenient method to contain the fluid may be to keep it within a thin flexible bag. A number of pressure controlled bags can be used to help support structures during launch, the fluid then being withdrawn to release the item and allow full deployment. A pressure controlled support can act to both reduce vibrations and supplement the normal mechanical containment methods used to keep the structure in place during the launch. If one unit would not provide sufficient support, a larger number could be used. The use of an incompressible fluid can enable higher pressures to be achieved in the support structures. In particular the use of an ER fluid can provide a greater range of resilience to be available for the support structure, especially if a fluid with a 'giant' ER effect is used. Because of the high fields of (up to 2000V/mm) are required for ER fluids the fluid-filled gap between the support structure and the fragile structure it supports should be kept as small as possible if an ER fluid is being used. While the following figures assume that the support structures are deployed between fixed structure and the fragile structure (e.g. between the vehicle casing and the mirror), they can also be used in between sections of fragile structures to stiffen them up, or even between two such structures. One such structure or part thereof then constitutes the support structure for the other.

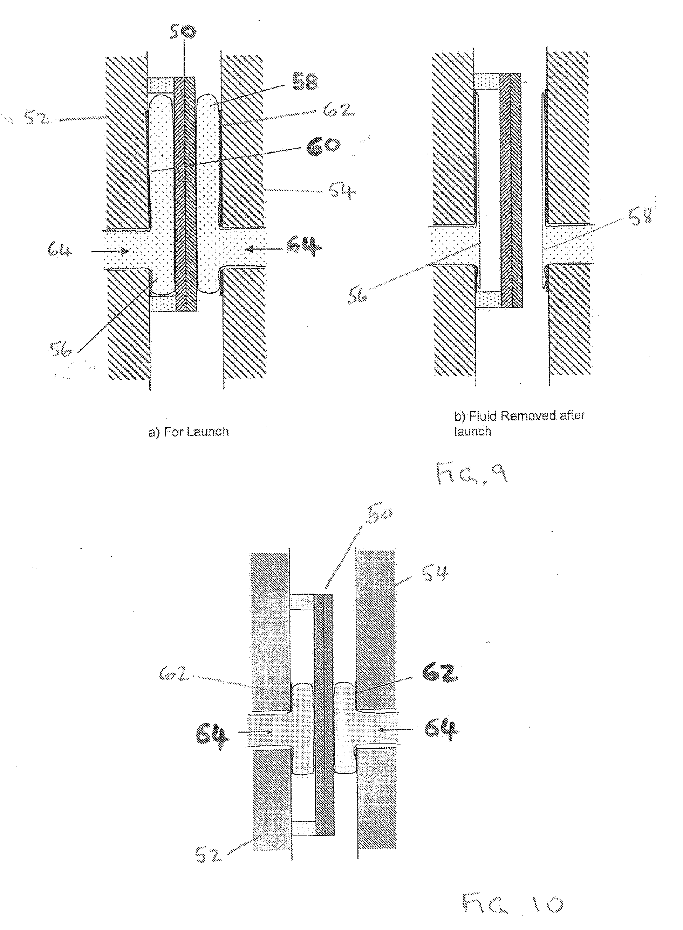

Referring to Figure 9, a thin edge-supported self-deformable mirror 50 is supported from its base 52 and from further fixed structure 54 by means of pressurisable fluid contained in thin flexible bags 56, 58 which respectively are secured at 60, 62 to the base and the further structure 52, 54. For launch, the bags 56, 58 are each filled with fluid 64 under pressure at the same time so as to support substantially the entire surface of the mirror on both sides. After launch the fluid is withdrawn, collapsing the bags 56, 58 and freeing the mirror from its support 54 and permitting it to be deployed.

It will be appreciated that the support for the underside of the mirror can be provided by utilising the cavity 26 of figure 1 to 7 as a container substituting for the bag 56. The bag 58 still may be utilised, unless (e.g. in Figure 3) the combination of the pressure fluid in cavity 26 plus the pillars 30 are considered to give sufficient support to the mirror substrate 10.

Referring to Figure 10, it is important to reduce weight where possible, so if it is sufficient to support only the centre portion of the mirror 50, smaller fluid-containing bags 66, 68 may be employed.

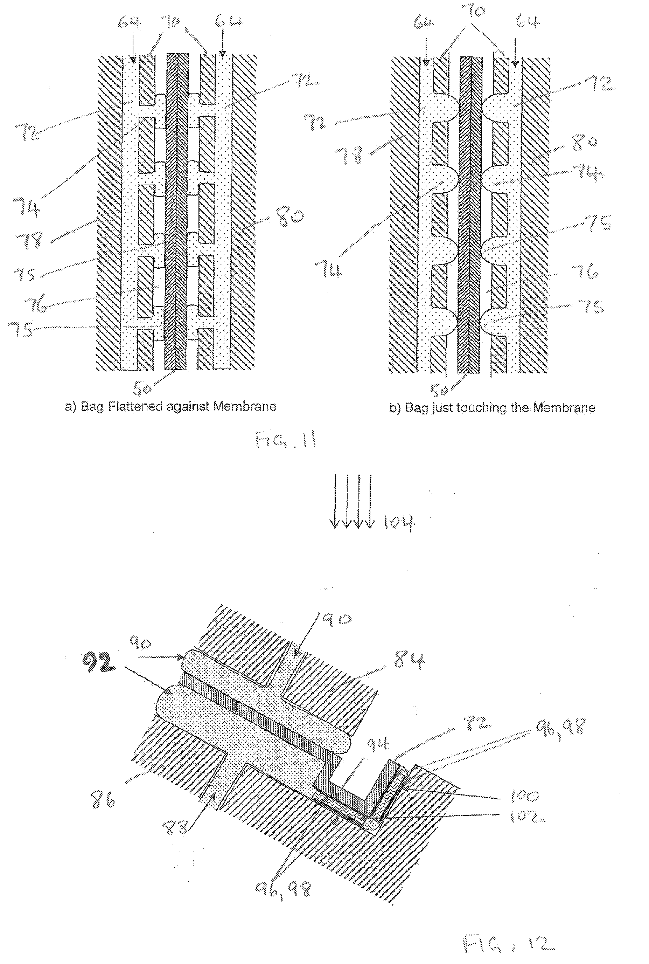

Again with the objective of reducing weight, in Figure 11, a barrier element 70 provides apertures 74 through which before launch a flexible bag 72 is extruded and is forced by pressure fluid within it to contact the mirror 50 at a number of spaced-apart locations 75, leaving voids 76 which in the Figure 9 embodiment would have been filled with fluid. In figure 11 (a) the bag is bonded to fixed structure 78, 80 and is shaped so as to provide substantial areas of contact at locations 75. This arrangement thus is suitable for use with a rheological (preferably ER) fluid. In Figure 11 (b) the flexible bag is merely extruded by fluid pressure alone through the apertures 74 and into contact with the mirror 50. After launch the fluid is withdrawn and the mirror is released for deployment.

Figure 12 shows a fragile structure 82 which is supported between fixed structures 84, 86 for launch. ER fluid under pressure is introduced through inlets 88, 90 into flexible bags 90, 92 to support the main part of the structure 82. The bags 90, 92 are bonded to the fixed structures 84, 86. The bag 92 also extends around a separate part 94 of the structure 82 and is provided with electrodes 96, 98 which apply an electric field locally across portions 100, 102 of the bag. The ER fluid within those portions is caused to increase in viscosity thereby providing extra support for the fragile structure against the main G-force 104 present during launch. Following launch, the fluid is withdrawn and the fragile structure released.

To summarise the invention, fluid force, applied e.g. via electrorheological fluid is used to control and/or support the shape of a self-deforming mirror during manufacture, use or transportation. For transportation, the mirror is supported beforehand by fluid in a flexible container. The fluid is withdrawn after transportation to permit release of the mirror. The transportation aspect of the invention is applicable also to other fragile structures.

## Claims

1. The use of a rheological fluid to support or control the shape of a self-deformable mirror.

2. The use of pressure in a fluid to support or control the shape of a self-deformable mirror.

3. The use of claim 1 wherein the support or control is effected by varying the pressure and/or the stiffness and/or viscosity of the fluid.

4. The use of any preceding claim comprising maintaining a confined volume of said fluid at a pressure above ambient pressure.

5. The use of any of claims 1 to 3 comprising generating pressure reactively in a confined volume of said fluid in response to deformation of the mirror.

6. The use of any preceding claim wherein the support or control is effected during polishing of a reflective surface of the mirror.

7. The use of any of claims 1 to 5 wherein the support or control is effected during operation of the mirror.

8. The use of any of claims 1 to 5 wherein the support or control is effected during transportation of the mirror.

9. A self-deformable mirror comprising a reflective surface on a substrate, a self-deformable means attached to the substrate for imparting deformation thereto, and means defining at least one cavity adapted to receive and contain fluid whereby in operation support and/or control is communicated to the substrate from the fluid.

10. The mirror of claim 9 wherein the means defining the cavity comprises a compliant edge support for the substrate, which support bounds the cavity.

11. The mirror of claim 9 or 10, comprising a porous or open cellular structure within the cavity for supporting the substrate.

12. The mirror of claim 9, 10 or 11 comprising at least one compliant support for the substrate disposed within the cavity.

13. The mirror of claim 9 wherein there are a plurality of said cavities for applying fluid support and/or control to different portions of the substrate.

14. The mirror of claim 13 wherein each cavity is bounded by a compliant structure.

15. The mirror of any of claims 9 to 14 wherein the fluid is an rheological fluid, the mirror comprising means for applying a magnetic or electric field to the fluid.

16. The mirror of claim 15 wherein the field-applying means is arranged to permit the application of different fields to fluid in different cavities or different fields to fluids in different parts of a common cavity.

17. The mirror of claim 15 or 16 wherein the rheological fluid is an electrorheological fluid and the deformable means comprises a piezoelectric element, a connection to at least one electrode thereof being provided via a flexible circuit which provides a connection also to a said electrode for applying an electric field to the fluid.

18. The mirror of any of claims 9 to 17 comprising means for pressurising the fluid in the cavity.
